# EUROPÄISCHE PATENTSCHRIFT

(11) **EP 1 731 067 B1**
(45) Veröffentlichungstag und Bekanntmachung des Hinweises auf die Patenterteilung: **28.12.2011**
(21) Anmeldenummer: 06011985.6
(22) Anmeldetag: 09.06.2006
(51) Int. Cl.: A47J 31/60, C02F 1/00

(54) **Wassertank**
Water tank
Réservoir d'eau

(30) Priorität: 09.06.2005 DE 102005026749
(43) Veröffentlichungstag der Anmeldung: 13.12.2006
(73) Patentinhaber: Aquis Wasser-Luft-Systeme GmbH, Lindau, 9445 Rebstein (CH)
(72) Erfinder: Wawrla, Andreas, 9443 Widnau (CH)
(74) Vertreter: Roth, Klaus

(56) Entgegenhaltungen:
- WO-A-99/01220
- DE-A1- 3 014 493

## Beschreibung

Die Erfindung betrifft einen Wassertank für eine Küchenmaschine, insbesondere eine gewerbliche Küchenmaschine oder eine Haushaltsmaschine nach dem Oberbegriff des Anspruchs 1.

Zum Einsatz in Getränkeautomaten sind Filterpatronen bekannt geworden, die unmittelbar in den Wasservorratsbehälter der Getränkemaschinen eingesetzt werden. Solche Filterpatronen sind beispielsweise in der Druckschrift DE 197 28 631 oder DE 301 44 93 beschrieben. Diese Filterpatronen sind mit bodenseitigen Wassereintrittsöffnungen versehen, durch die das Wasser eintritt. Nach eine Fließstrecke im Inneren der Filterpatrone wird das gefilterte Wasser durch einen zentralen, bodenseitigen Ausgang, der mit einem Sauganschluss der Maschine verbunden ist, ausgeleitet.

Der Anschluss dieser bekannten Filterpatronen erfolgt durch Aufstecken an Anschlusselemente, die bodenseitig im Wasservorratsbehälter angebracht sind. Insbesondere bei Filterpatronen, die eine gewisse Höhe aufweisen, ist hierbei eine einseitige Halterung am Boden des Wasservorratsbehälters problematisch. So kann beispielsweise durch eine ungenügende axiale Ausrichtung der Filterpatrone der dichte Anschluss beeinträchtigt werden.

Aus diesem Grund werden handelsübliche Filterpatronen am Deckel des Wasservorratsbehälters oder durch ein spezielles Spannelement am oberen Tankende über den Deckel der Filterpatrone abgestützt. Beim Nachfüllen des Wassers wird jedoch der Deckel des Wassertanks geöffnet, so dass in der Ausführungsform mit Abstützung am Tankdeckel die Bedienperson jedes Mal beim Nachfüllen auf eine korrekte Verbindung mit dem Stützelement achten muss. Beim Abstützen über das Spannelement am oberen Tankende muss jedes Mal beim Einsetzen der Patrone auf einen korrekten Sitz geachtet werden.

Aufgabe der Erfindung ist es, die Handhabung eines solchen Wassertanks mit Filterpatrone für eine Getränkemaschine zu verbessern.

Diese Aufgabe wird ausgehend von einem Wassertank der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich ein erfindungsgemäßer Wassertank dadurch aus, dass der Wassertank eine sich wenigstens zu 1/5 der Patronenhöhe vom Boden des Wassertanks erstreckende oder beabstandete Patronenhalterung umfasst. Durch eine solche Patronenhalterung mit einer entsprechenden Führungshöhe von wenigstens 1/5 der Patronenhöhe kann eine Abstützung am Deckel des Wassertanks oder mittels eines speziellen Spannelementes ohne Beeinträchtigung der axialen Ausrichtung der Filterpatrone und somit ohne Beeinträchtigung des dichten unteren Abschlusses der Patrone entfallen, wodurch die Handhabung, insbesondere beim Nachfüllen von Wasser in den Wassertank und beim Einsetzen der Patrone, erheblich verbessert wird.

Vorzugsweise wird die Patronenhalterung an wenigstens einer Seitenwand, beispielsweise der Rückwand, des Wassertanks befestigt.

Eine solche Patronenhalterung, die starr mit der Wandung des Wassertanks verbindbar ist, ist als stabile Halterung mit oder auch ohne Abstützung an einem beweglichen Deckel des Wassertanks realisierbar.

Grundsätzlich könnte eine Patronenhalterung auch am Boden des Wassertanks befestigt werden und sich nach oben bis in den erfindungsgemäßen Bereich der Filterpatrone erstrecken, in dem die Patronenhalterung an der Filterpatrone wirksam ansetzt. Bei der Befestigung an einer Seitenwand bleibt jedoch der Zwischenbereich zwischen der Patronenhalterung und dem Boden ungestört. Insbesondere kann die konstruktive Ausgestaltung des bodenseitigen Anschlusselementes dadurch unbeeinträchtigt von der Patronenhalterung erfolgen.

Die Patronenhalterung ist so ausgebildet, dass sie die Filterpatrone im eingebauten Zustand wenigstens teilweise umschließt. Auf diese Weise kann die Patronenhalterung durch Einführen der Filterpatrone ihre Halterungsfunktion wahrnehmen, ohne dass zusätzliche Verriegelungselemente oder dergleichen angebracht werden müssen.

Eine Weiterbildung der vorgenannten Ausführungsform sieht eine ringförmig ausgebildete Patronenhalterung vor. Unter dem Begriff 'ringförmig' wird hierbei eine geschlossene Form mit beliebigem Verlauf verstanden, d.h. eine Ringform in diesem Sinne kann beispielsweise kreisförmig, oval oder auch eckig ausgebildet sein, sofern die Form lediglich geschlossen ist. Eine ringförmige Patronenhalterung gewährleistet die Halterungsfunktion in alle Querrichtungen, z.B. bei einem Kreisring in radialer Richtung. Darüber hinaus ist eine ringförmige Halterung materialsparend und dennoch stabil.

In einer Weiterbildung der Erfindung wird die Patronenhalterung zugleich als Einführhilfe für die Filterpatrone ausgebildet, um das Einsetzen der Filterpatronen zu erleichtern. Somit dient die erfindungsgemäße Patronenhalterung, vor allem bei länglichen Patronen, einer besseren Einführung, um die Patrone gezielt auf das Tankanschlusselement zu platzieren.

Die Einführhilfe kann beispielsweise dadurch realisiert werden, dass an der Patronenhalterung ein oder mehrere Führungselemente, insbesondere in axialer Richtung vorgesehen werden. In einer einfachen Ausführungsform ist dies beispielsweise durch eine gewisse axiale Führungslänge einer ringförmigen Patronenhalterung mit entsprechender Bauhöhe realisierbar, wobei bevorzugt eine an die Außenform der Filterpatrone angepasste, z.B. zylindrische oder konische Führungsfläche vorgesehen wird. Denkbar sind auch eigens als Einführhilfe ausgebildete Führungselemente in Form von Rippen, Stegen oder dergleichen. Das innenseitige Anbringen von Führungsrippen oder dergleichen Vorsprünge verringert die Reibung zwischen Patrone und Patronenhalterung beim Einsetzen bzw. bei der Entnahme der Filterpatrone gegenüber einer flächigen Anlage.

In einer Weiterbildung der Erfindung umfasst die Patronenhalterung ein axiales Fixierelement, um die Filterpatrone gegen eine unerwünschte axiale Verschiebung zu sichern, z.B. bei Entnahme des Wassertanks zur Befüllung.

Vorzugsweise wird die Patronenhalterung auch als axiales Positionierelement ausgebildet, um die Einbauposition der Filterpatrone in axialer Richtung zu definieren. Dies ist insbesondere dann von Vorteil, wenn der tankseitige Anschluss über eine Axialdichtung vorgenommen wird, die durch axialen Druck der Filterpatrone an eine entsprechende Dichtfläche angedrückt wird. In einer besonders vorteilhaften Ausführungsform der Erfindung wird dabei mit Hilfe der Patronenhalterung die Filterpatrone in axialer Richtung sowohl positioniert als auch fixiert.

Weiterhin kann die Patronenhalterung auch als radiales Positionierungs- und/oder Fixierelement ausgebildet werden. Dadurch wird eine definierte Position der Filterpatrone in der Betriebsposition gewährleistet. Dies ist unter anderem für den dichten Abschluss an der Saugleitung von Bedeutung, insbesondere dann, wenn die Abdichtung, wie oben angeführt, lediglich durch axialen Druck einer Dichtung auf eine entsprechende Dichtfläche bewerkstelligt wird. Durch eine radiale Positionssicherung wird ein Abkippen der Filterpatrone verhindert, so dass der dichtende Formschluss der Axialdichtung zuverlässig gewährleistet bleibt.

Für die oben angeführten Positionierungs- und Fixierungsfunktionen wird die Patronenhalterung und/oder die Filterpatrone vorzugsweise mit entsprechenden Positionierungs- und/oder Fixierungselementen versehen. Als Positionierungselemente sind Vorsprünge wie Rippen, Nocken oder dergleichen zu bevorzugen, da hierdurch die Reibung mit der Wandung der Filterpatrone beim Aneinandergleiten verringert wird, ohne die Funktion als Positionierungs- und/oder Fixierelement zu beeinträchtigen.

Weiterhin wird für die Verbesserung der Positionierung der Filterpatrone die Patronenhalterung und die Filterpatrone derart angepasst, dass in eingebautem Zustand der Filterpatrone ein Formschluss zwischen der Filterpatrone und der Patronenhalterung vorgesehen ist. Ein solcher, wenigstens teilweise vorliegender Formschluss kann auch während des Einsteckvorgangs vorgesehen werden. Durch den Formschluss, z.B. an einer zylindrischen oder konischen Führungsfläche, wird die Filterpatrone exakt in radialer und/oder in axialer Richtung fixiert.

Anstatt oder zusammen mit einer außenseitig an der Patrone angreifenden Patronenhalterung kann auch eine Patronenhalterung vorgesehen werden, die ein zentrales, koaxial mit der Patronenachse angeordnetes, in die Patrone hineinragendes Halterungselement umfasst. Eine derartige Patronenhalterung kann bei Filterpatronen mit unterschiedlichen Außengeometrien zum Einsatz kommen. Darüber hinaus ist eine derartige Patronenhalterung mit eingesetzter Filterpatrone von außen nicht sichtbar und dient somit auch der verbesserten Ansicht des Wassertanks mit eingesetzter Filterpatrone.

Vorteilhafterweise umfasst ein solches zentrales Halterungselement einen Durchlass für gefiltertes Wasser. Hierdurch ist es möglich, ein zentrales Fallrohr in der Filterpatrone zugleich als korrespondierendes Halterungselement auszubilden, wobei der Wasserfluss in dem Fallrohr durch die Ausnehmung in dem zentralen Halterungselement gewährleistet ist.

Das zentrale, koaxiale, innere Halterungselement wird hierzu vorteilhafterweise außenseitig mit einer Anschlag- und/oder Führungsfläche zum Formschluss mit einer korrespondierenden Anschlag- und/oder Führungsfläche der Filterpatrone versehen. Diese Anschlag- und/oder Führungsfläche in der Filterpatrone kann beispielsweise unmittelbar die Innenwandung des Fallrohrs darstellen, wobei gegebenenfalls eine kleine Ringschulter zum axialen Anschlag des tankseitigen Halterungselementes vorgesehen werden kann.

Ein solches inneres Halterungselement kann nahezu über die gesamte Länge des Fallrohrs einer Filterpatrone ausgebildet werden. Es wird erfindungsgemäß zumindest über 1/5 der Patronenhöhe ausgebildet, so dass sich eine ausreichende Führungslänge für eine sichere Positionierung der Filterpatrone ohne die Gefahr von Kippbewegungen oder dergleichen ergibt.

Ein zentrales inneres Führungselement kann beispielsweise unmittelbar am Boden des Wassertanks im Bereich der Anschlusselemente angeformt oder auch angesetzt, beispielsweise verklebt oder verschweißt werden.

Auch eine Anordnung an dem Auslassventil des Wassertanks ist möglich, wobei sich hierbei der zusätzliche Vorteil ergibt, dass das innere Halterungselement vom Wassertank separat zu fertigen und problemlos gemeinsam mit dem Auslassventil des Wassertanks montierbar ist.

Eine erfindungsgemäße Patronenhalterung kann auch andere Funktionen erfüllen. So kann beispielsweise eine Anzeige angebracht werden, anhand der die korrekte Position der Filterpatrone erkennbar ist. Eine solche Anzeige kann beispielsweise zur Anzeige der Winkelposition oder der axialen Einbauposition der Filterpatrone vorgesehen sein.

Darüber hinaus können auch Funktionen, wie die Anzeige der Härtegradeinstellung, der Filterkapazität, etc., mit Anzeigeelementen an der Patronenhalterung verbunden werden.

Ein Ausführungsbeispiel der Erfindung ist in der Zeichnung dargestellt und wird anhand der beiden Figuren nachfolgend näher beschrieben.

### Im Einzelnen zeigen

- Figur 1: eine perspektivische Darstellung eines nicht erfindungsgemäßen Wassertanks einer Getränkemaschine mit eingesetzter Filterpatrone;
- Figur 2: eine perspektivische, aufgeschnittene Darstellung eines Wassertanks gemäß Figur 1;
- Figur 3: eine Schnittdarstellung eines Ausschnitts aus einem Tankboden eines nicht erfindungsgemäßen Wassertanks mit innerem Halterungselement und;
- Figur 4: eine Darstellung entsprechend Figur 3 einer weiteren nicht erfindungsgemäßen Ausführungsform mit innerem Halterungselement;
- Figur 5: eine Schnittdarstellung einer weiteren Ausführungsform des Wassertanks;
- Figur 6: eine Schnittdarstellung einer erfindungsgemäßen Ausführungsform der Erfindung und
- Figur 7: eine Schnittdarstellung durch eine erfindungsgemäße Ausführungsform gemäß Figur 6.

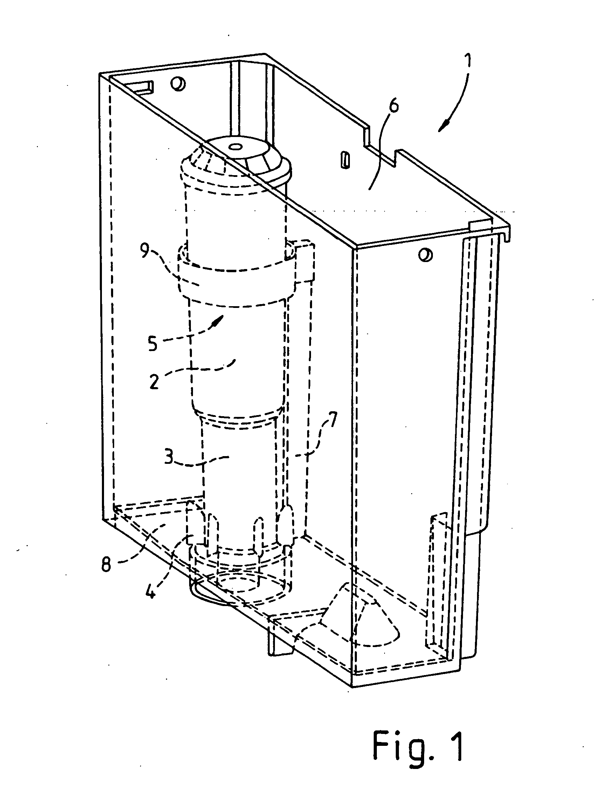

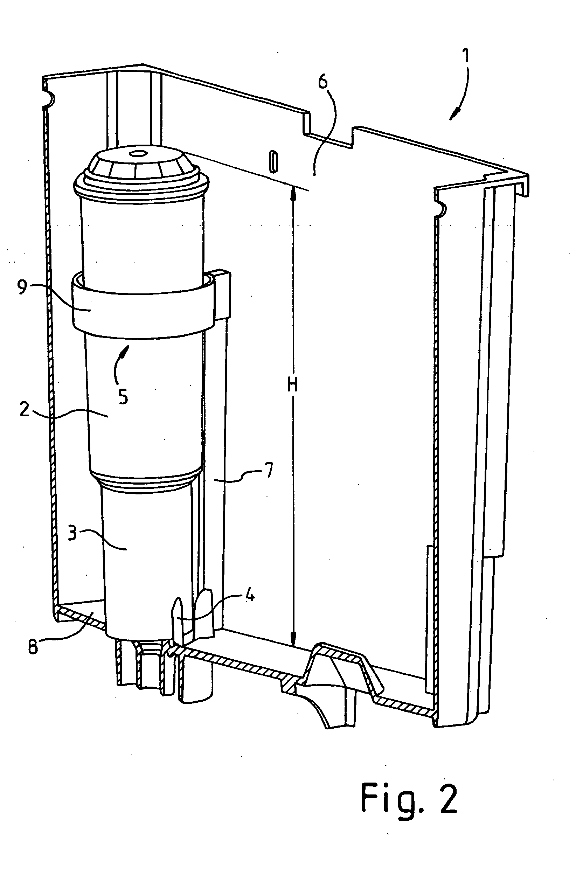

Die Figuren 1 und 2 zeigen einen Wassertank 1, wie er beispielsweise in handelsüblichen Espressomaschinen Verwendung findet. Der Wassertank 1 ist ohne Deckel dargestellt.

Eine Filterpatrone 2 ist im Innern der Filterpatrone mit ihrem Anschlussstutzen 3 in ein bodenseitiges Anschlusselement 4 des Wassertanks 1 eingesetzt.

Auf der Rückseite ist eine Patronenhalterung 5 mit der Rückwand 6 des Wassertanks 1 verbunden, die weiter als 1/5 der Patronenhöhe H vom Boden des Wassertanks 1 beabstandet ist. Die Patronenhalterung umfasst eine vertikale Stütze 7, die sich am Boden 8 des Wassertanks 1 abstützt. An der vertikalen Stütze 7 ist ein Halterungsring 9 befestigt, der die Filterpatrone 2 umschließt und sich im Wesentlichen horizontal ins Innere des Wassertanks 1 erstreckt.

In dieser einfachen Ausführungsform der Erfindung dient die Patronenhalterung als Einführhilfe sowie als radiales Positionierungs- und Fixierelement.

Das Einsetzen der Filterpatrone wird dadurch erleichtert, dass in den vergleichsweise weit oben angeordneten Halterungsring eine Filterpatrone 2 von einer Bedienperson leicht einzuführen ist und demnach eine Führung der Filterpatrone 2 beim Aufstecken auf das Anschlusselement 4 vorhanden ist.

Dadurch, dass der Halterungsring 9 die Filterpatrone 2 vollständig umschließt, ergibt sich in der montierten Position gemäß Figur 1 und 2 eine Kippsicherung der Filterpatrone 2, so dass das zuverlässige Einhalten der einmal eingestellten Position der Filterpatrone sichergestellt ist.

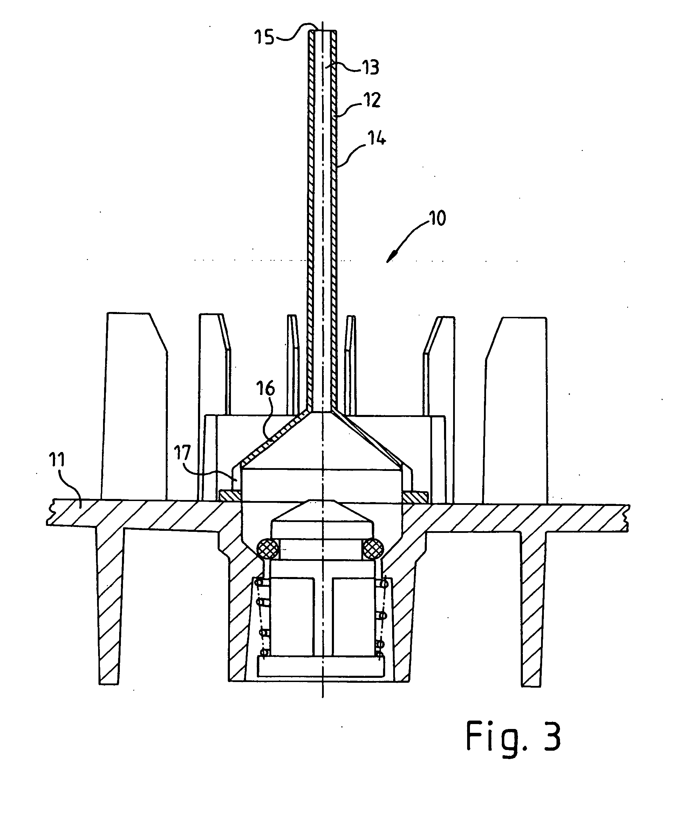

Figur 3 zeigt einen Ausschnitt aus einem Wassertank mit einer alternativen Patronenhalterung 10. Der Boden 11 des Wassertanks ist teilweise in geschnittener Darstellung gezeichnet. Ein zentrales, koaxial abstehendes Rohr dient als inneres Halterungselement 12, das in die Fallleitung einer nicht näher dargestellten Filterpatrone wenigstens mit einer Höhe einfügbar ist, die 1/5 der Patronenhöhe entspricht. Im Inneren dieses Halterungselementes 12 befindet sich ein zentraler Durchlass 13 für gefiltertes Wasser, das beispielsweise über eine Fallleitung einer Filterpatrone in den Durchlass 13 gelangen kann.

Die Außenfläche 14 dient dabei als Anschlag- und Führungselement für die Patrone, um die Fixierung und Positionierung in radialer Richtung sicherzustellen. Die Stirnfläche 15 kann darüber hinaus als axialer Anschlag dienen und so die Einstecktiefe einer dazupassenden Filterpatrone begrenzen, was beispielsweise für eine definierte Verformung einer Lippendichtung zum dichten Anschluss der Patrone von Vorteil sein kann.

Das Halterungselement 12 ist über eine kegelstumpfförmige Querschnittsverbreiterung 16 am Boden 11 befestigt, die einen oder mehrere Durchlässe 17 für den Betrieb der zugehörigen Getränkemaschine ohne Filterpatrone aufweist. Die eingesteckte Filterpatrone schließt dabei diese Durchlässe 17 ab, so dass der Wasserfluss durch die Filterpatrone sichergestellt ist.

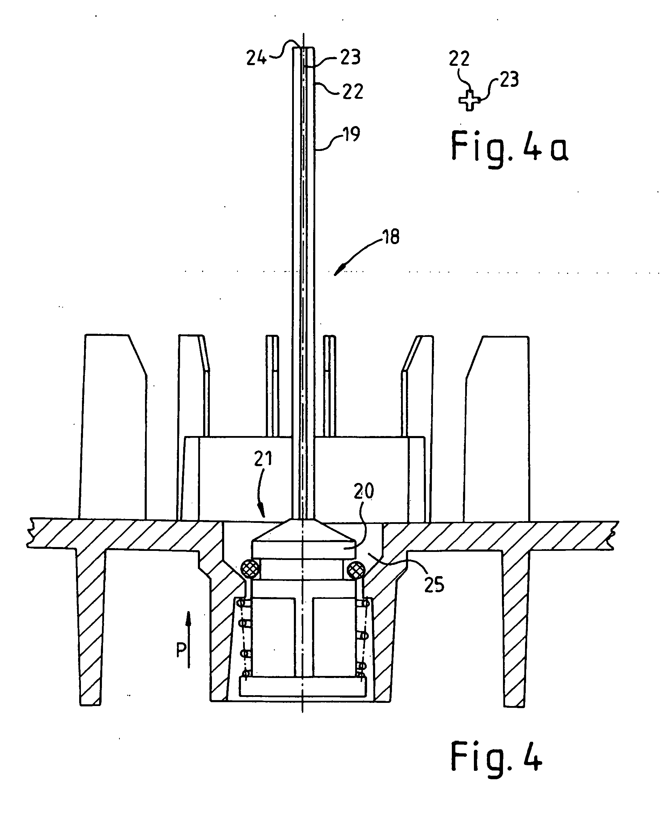

Die Ausführung gemäß Figur 4 zeigt ebenfalls eine innere Patronenhalterung 18, auf die eine Filterpatrone aufsteckbar ist. Nunmehr ist jedoch das Halterungselement 19 kein Rohr, sondern als Stab mit kreuzförmigem Querschnitt ausgebildet, wie in der Draufsicht von oben gemäß Figur 4a dargestellt ist. Weiterhin ist das Halterungselement 19 am Ventilelement 20 des Auslassventils 21 des Wassertanks angebracht. Hierdurch ist eine separate Fertigung und Montage des Halterungselementes 19 zusammen mit dem Auslassventil 21 möglich.

Die Außenflächen 22 der kreuzförmig abstehenden Rippen 23 des Halterungselementes 19 dienen wiederum als Anschlag- und Führungselemente, mittels denen die aufgesteckte Filterpatrone in radialer Richtung fixiert und zentriert wird. Sie dienen zugleich als Führungshilfe beim Einstecken der Filterpatrone. Die Stirnseite 24 kann wiederum als axiale Anschlagfläche verwendet werden.

Eine solche Ausführungsform der Patronenhalterung 18 kann beispielsweise in ein zylindrisches Fallrohr einer Filterpatrone eingeführt werden. In den Zwischenräumen zwischen den Rippen 23 ist dabei ein Wasserfluss nach unten im Bereich des Anschlusses des Wassertanks möglich.

In beiden Ausführungsformen gemäß den Figuren 3 und 4 kann das Auslassventil 21 seine übliche Funktion wahrnehmen. Das Auslassventil 21 dichtet hierbei den Wassertank bei Entfernung aus der Getränkemaschine ab und öffnet durch Eindrücken des Ventilelementes 20 nach oben in Richtung Pfeil P beim Aufsetzen auf einem Gegenstück der Getränkemaschine die Anschlussöffnung 25, so dass die nicht näher dargestellte Getränkemaschine Wasser aus dem Wassertank entnehmen kann.

Die dargestellten Zeichnungen lassen deutlich erkennen, dass jede der Patronenhalterungen 5, 10, 18 ihre Funktion mit, aber auch ohne den nicht dargestellten Deckel des Wassertanks 1 erfüllen kann.

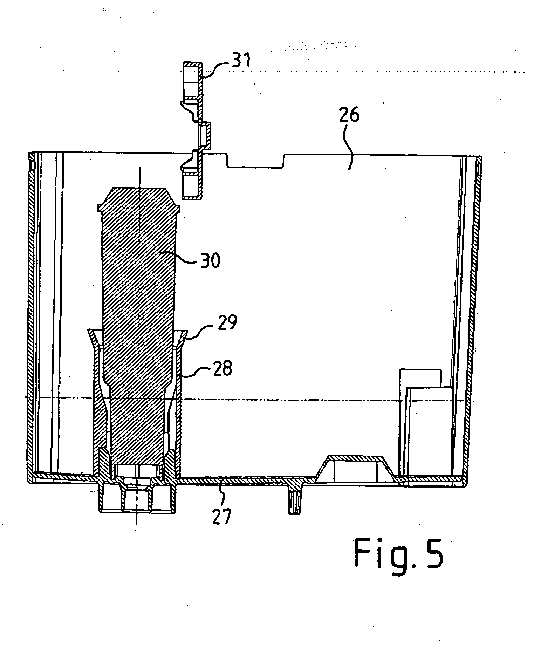

In der Darstellung gemäß Figur 5 ist ein Wassertank 26 dargestellt, der im Anschlussbereich eine vom Boden 27 des Wassertanks nach oben abstehende Einführhülse 28 aufweist. Die Einführhülse 28 ist mit einem Einführtrichter 29 versehen, um das Einführen einer Filterpatrone 30 zu erleichtern.

Im dargestellten Ausführungsbeispiel ist die Einführhülse 28 leicht beabstandet von der Filterpatrone 30, so dass sie in dieser Ausführungsvariante nur als Einführhilfe dient. Um eine präzise achsenparalle Führung zu gewährleisten, kann ein Formschluss mit der Filterpatrone, beispielsweise durch Verkleinerung des Innendurchmessers der Einführhülse 28 oder aber durch zusätzliches Anbringen von Führungselementen, wie Rippen oder dergleichen, vorgesehen werden.

In Figur 5 ist weiterhin ein Deckel 31 dargestellt, der dergestalt schwenkbar ist, dass er von oben auf die Filterpatrone 30 aufsetzt und diese somit zusätzlich haltert oder führt. Die Einführhülse 28 ist mit oder ohne Deckel 31 vorteilhaft einsetzbar.

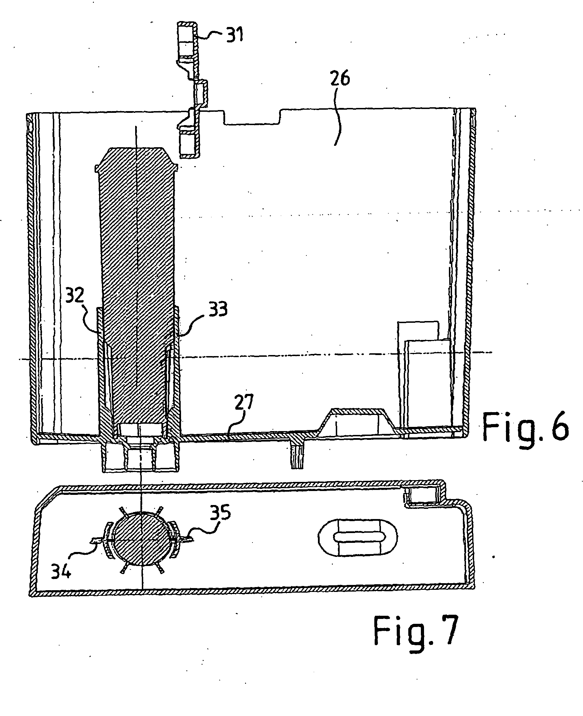

Die Figur 6 zeigt einen erfindungsgemäßen Wassertank 26 mit vom Boden abstehenden Halterungs- und Führungselementen. Dabei sind zwei Seitenstege 32, 33 am Boden 27 des Wassertanks 26 angeformt. Die Seitenstege 32 sind kreissegmentartig ausgeformt und umgreifen die Filterpatrone 30. Figur 7 zeigt eine Ausführungsvariante gemäß Figur 6, wobei zusätzlich die Seitenstege 32, 33 durch Stabilisierungsrippen 34, 35 am Boden 27 abgestützt sind. Auch die Varianten gemäß den Figuren 6, 7 kann mit oder ohne Deckel 31 Verwendung finden.

Bezugszeichenliste:
- 1: Wassertank
- 2: Filterpatrone
- 3: Anschlussstutzen
- 4: Anschlusselement
- 5: Patronenhalterung
- 6: Rückwand
- 7: Stütze
- 8: Boden
- 9: Halterungsring
- 10: Patronenhalterung
- 11: Boden
- 12: Halterungselement
- 13: Durchlass
- 14: Außenfläche
- 15: Stirnfläche
- 16: Querschnittsverbreitung
- 17: Durchlass
- 18: Patronenhalterung
- 19: Halterungselement
- 20: Ventilelement
- 21: Auslassventil
- 22: Außenfläche
- 23: Rippen
- 24: Stirnseite
- 25: Anschlussöffnung
- 26: Wassertank
- 27: Boden
- 28: Einführhülse
- 29: Einführtrichter
- 30: Filterpatrone
- 31: Deckel
- 32: Seitensteg
- 33: Seitensteg
- 34: Stabilisierungsrippe
- 35: Stabilisierungsrippe

## Patentansprüche

1. Wassertank für eine Küchenmaschine, insbesondere eine gewerbliche Küchenmaschine oder eine Haushaltsmaschine, wie einen Getränkeautomaten, insbesondere einen Kaffeeautomaten, einen Dampfreiniger oder dergleichen, mit einer Filterpatrone zum Einsetzen in den Wassertank und mit einem bodenseitigen Anschluss- und Zentrierelement zum Anschluss der Filterpatrone, **dadurch gekennzeichnet, dass** eine sich wenigstens zu 1/5 der Patronenhöhe (H) vom Boden des Wassertanks (1) erstreckende, zwei vom Boden (27) abstehende, kreissegmentartig ausgeformte Seitenstege (32, 33) umfassende Patronenhalterung (5) vorgesehen ist.

2. Wassertank nach Anspruch 1, **dadurch gekennzeichnet, dass** die Patronenhalterung an der umfangseitigen Außenseite der Filterpatrone (2) wirksam ist.

3. Wassertank nach einem der vorgenannten Ansprüche **dadurch gekennzeichnet, dass** die Patronenhalterung (5) die Filterpatrone (2) im eingebauten Zustand wenigstens teilweise umschließt.

4. Wassertank nach einem der vorgenannten Ansprüche **dadurch gekennzeichnet, dass** die Patronenhalterung ein Anzeigeelement umfasst.

5. Wassertank nach einem der vorgenannten Ansprüche **dadurch gekennzeichnet, dass** die Patronenhalterung zusätzliche Funktionselemente umfasst.

6. Wassertank nach einem der vorgenannten Ansprüche **dadurch gekennzeichnet dass** die Filterpatrone (2) an die Patronenhalterung (5) des Wassertanks (1) nach einem der vorgenannten Ansprüche angepasst ist.

7. Getränkemaschine mit einem Wassertank **dadurch gekennzeichnet, dass** der Wassertank (1) nach einem der vorgenannten Ansprüche ausgebildet ist.

## Claims

1. Water tank for a kitchen machine, in particular a commercial kitchen machine or a domestic machine, such as a drinks machine, in particular a coffee machine, a steam cleaner or the like, with a filter cartridge for inserting into the water tank and with a base-side connection and centring element for connecting the filter cartridge, **characterised i**n that a cartridge holder (5) is provided which extends at least up to 1/5 of the cartridge height (H) from the base of the water tank (1) and comprises two side bars (32, 33) shaped to be in the form of a circular segment projecting from the base (27).

2. Water tank according to claim 1, **characterised in that** the cartridge holder is effective on the circumferential outer side of the filter cartridge (2).

3. Water tank according to one of the preceding claims, **characterised in that** the cartridge holder (5) surrounds at least partly the filter cartridge (2) in the installed state.

4. Water tank according to one of the preceding claims, **characterised in that** the cartridge holder comprises a display element.

5. Water tank according to one of the preceding claims, **characterised in that** the cartridge holder comprises additional function elements.

6. Water tank according to one of the preceding claims, **characterised in that** the filter cartridge (2) is adjusted to the cartridge holder (5) of the water tank (1) according to one of the preceding claims.

7. Drinks machine with a water tank **characterised in that** the water tank (1) is designed according to one of the preceding claims.

## Revendications

1. Réservoir d'eau pour une machine de cuisine notamment une machine de cuisine industrielle ou une machine domestique telle qu'un distributeur automatique de boissons notamment un distributeur automatique de café, un dispositif de nettoyage à la vapeur ou analogue comportant une cartouche de filtre destinée à se loger dans le réservoir d'eau ainsi qu'un élément de branchement et de centrage prévu au fond pour brancher la cartouche de filtre,
réservoir **caractérisé en ce que**
il comporte un support de cartouche (5) remontant à partir du fond du réservoir d'eau (1) au moins sur une hauteur de 1/5 de la hauteur (H) de la cartouche, et ayant deux barrettes latérales (32, 33) en forme de segment de cercle, en saillie par rapport au fond (27).

2. Réservoir d'eau selon la revendication 1,
**caractérisé en ce que**
le support de cartouche agit sur le côté extérieur périphérique de la cartouche de filtre (2).

3. Réservoir d'eau selon l'une des revendications précédentes,
**caractérisé en ce que**
le support de cartouche (5) entoure au moins en partie la cartouche de filtre (2) à l'état installé.

4. Réservoir selon l'une des revendications précédentes,
**caractérisé en ce que**
le support de cartouche comporte un élément d'affichage.

5. Réservoir selon l'une quelconque des revendications précédentes,
**caractérisé en ce que**
le support de cartouche comporte des éléments fonctionnels supplémentaires.

6. Réservoir selon l'une des revendications précédentes,
**caractérisé en ce que**
la cartouche de filtre (2) est adaptée au support de cartouche (5) du réservoir d'eau (1) selon l'une des revendications précédentes.

7. Machine à boisson comportant un réservoir d'eau,
**caractérisée en ce que**
le réservoir d'eau (1) est réalisé selon l'une des revendications précédentes.
